# EUROPEAN PATENT APPLICATION

(11) **EP 4 757 131 A1**
(43) Date of publication of application: **10.06.2026**
(21) Application number: 25221339.2
(22) Date of filing: 08.12.2025
(51) Int. Cl.: H02K 3/24, H02K 3/34, H02K 3/38, H02K 9/197

(54) **ELECTRIC MACHINE**

(30) Priority: 09.12.2024 US 202463729599 P
(71) Applicant: BorgWarner Inc., Auburn Hills, MI 48326 (US)
(72) Inventor: MAYER, Andreas WP, Clarkston, MI, 48346 (US); ISHIHARA, Mitsuru, Rochester Hills, MI, 48304 (US); BOURN, James, Oxford, MI, 48371 (US); DIKO, Andi, Auburn Hills, MI, 48326 (US)
(74) Representative: Peterreins Schley

(57) **Abstract**

An electric machine includes a machine housing, and a stator including a stator core defining a stator core interior and a plurality of windings disposed in the stator core interior. The plurality of windings has first and second end windings. The electric machine further includes an internal core surrounding the plurality of windings within the stator core interior. The internal core includes a first upper portion, a second upper portion, a first lower portion, and a second lower portion. The electric machine includes a first insert surrounding the first plurality of windings. The first insert is engaged with the internal core to define a first cooling channel for encapsulating the first end windings. The electric machine also includes a second insert surrounding the second plurality of windings. The second insert is engaged with the internal core to define a second cooling channel for encapsulating the second end windings.

## Description

### CROSS-REFERENCE TO RELATED APPLICATIONS

The present application claims priority to and all the benefits of U.S. Provisional Patent Application No. 63/729,599 filed December 9, 2024, which is hereby expressly incorporated herein by reference in its entirety.

### BACKGROUND OF THE DISCLOSURE

### 1. Field of the Disclosure

The subject disclosure relates to the field of electric machines and, in particular, electric machines for use in a drive module assembly.

### 2. Description of the Related Art

Conventional drive module assemblies include an electric machine configured to deliver rotational torque to wheels of a vehicle. To help deliver rotational torque to wheels of a vehicle, conventional drive module assemblies include gears and a differential to ultimately deliver the rotational torque from the electric machine to wheels of the vehicle to allow the vehicle to maneuver.

As hybrid vehicles and battery electric vehicles become more prevalent, the need for efficient and reliable drive module assemblies has become increasingly important. One of the main challenges in designing drive module assemblies for hybrid vehicles and battery electric vehicles is achieving high efficiency while maintaining a compact size and low weight. Hybrid vehicles and battery electric vehicles often have limited space available for the drive module assembly, and any added weight can reduce the vehicle's range and performance.

In recent years, advances in electric motor technology and power electronics have led to the development of more compact and efficient drive module assemblies. Additionally, advances in electric motor technology have increased the power output and rotational speed of various electric motors, which results in increased heat produced by the electric motors. To this end, there have been challenges with adequately cooling the electric motors. Therefore, there still remains a need for an electric machine with improved cooling capabilities, all while having improved efficiency and increased performance while addressing the deficiencies set forth above.

### SUMMARY OF THE INVENTION

An electric machine includes a machine housing defining a machine housing interior. The electric machine includes a stator disposed in the machine housing interior and extending along a stator axis. The stator includes a stator core defining a stator core interior and a plurality of windings disposed in the stator core interior. The plurality of windings has first end windings extending outside of the stator core interior in a first direction along the stator axis and second end windings extending outside of the stator core interior in a second direction along the stator axis opposite the first direction. The electric machine further includes an internal core surrounding the plurality of windings within the stator core interior. The internal core includes a first upper portion facing the first direction, a second upper portion spaced from the first upper portion along the stator axis and facing the second direction, a first lower portion disposed between the first upper portion and the stator axis and facing the first direction, and a second lower portion disposed between the second upper portion and the stator axis and facing the second direction. The electric machine includes a first insert surrounding the first plurality of windings. The first insert is engaged with the internal core to define a first cooling channel for encapsulating the first end windings. The electric machine also includes a second insert surrounding the second plurality of windings. The second insert is engaged with the internal core to define a second cooling channel for encapsulating the second end windings.

### BRIEF DESCRIPTION OF THE DRAWINGS

Other advantages of the present invention will be readily appreciated, as the same becomes better understood by reference to the following detailed description when considered in connection with the accompanying drawings.
FIG. 1 is a perspective view of an electric machine.
FIG. 2 is a perspective view of a stator and an internal core of the electric machine.
FIG. 3 is a cross-sectional view of the stator including a plurality of windings, and the internal core.

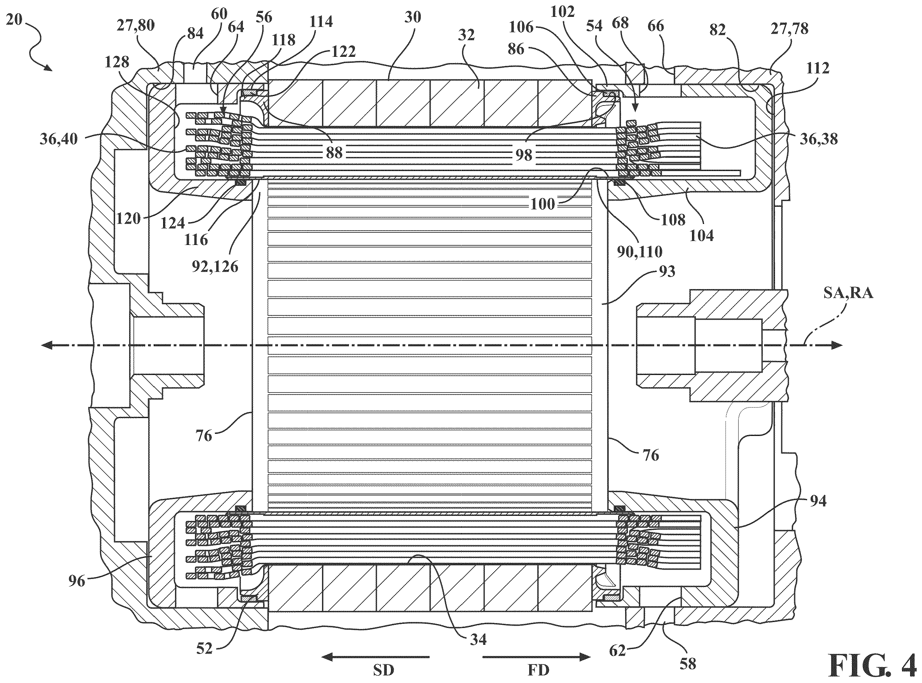

FIG. 4 is a cross-sectional view of the electric machine with the internal core including a first upper portion facing a first direction, a second upper portion spaced from the first upper portion along a stator axis and facing a second direction, a first lower portion disposed between the first upper portion and the stator axis and facing the first direction, and a second lower portion disposed between the second upper portion and the stator axis and facing the second direction, with the electric machine also including a first insert surrounding the first end windings, with the first insert being engaged with the internal core to define a first cooling channel for encapsulating the first end windings, and a second insert surrounding the second end windings, with the second insert being engaged with the internal core to define a second cooling channel for encapsulating the second end windings.
FIG. 5 is a side cross-sectional view of the electric machine, with the electric machine including a first supply path and first supply inlet.
FIG. 6 is a side cross-sectional view of the electric machine, with the electric machine including a first outlet path and a first outlet.
FIG. 7 is a cross-sectional view of a drive module assembly including the electric machine and a geartrain.
FIG. 8 is a close-up, cross-sectional view of the first insert being engaged with the internal core to define the first cooling channel for encapsulating the first end windings.
FIG. 9 is a close-up, perspective cross-sectional view of the first insert being engaged with the internal core to define the first cooling channel for encapsulating the first end windings.
FIG. 10 is a close-up, perspective cross-sectional view of the first insert surrounding the first end windings, with the first insert being engaged with the internal core to define the first cooling channel for encapsulating the first end windings.
FIG. 11 is a close-up, cross-sectional view of another embodiment of the first insert being engaged with the internal core to define the first cooling channel for encapsulating the first end windings.
FIG. 12 is a close-up, cross-sectional view of another embodiment of the second insert being engaged with the internal core to define the second cooling channel for encapsulating the second end windings.

### DETAILED DESCRIPTION OF THE INVENTION

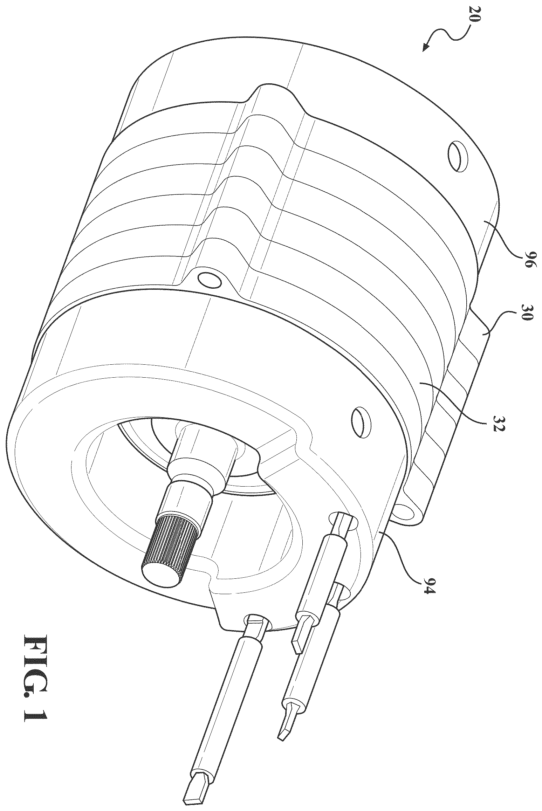

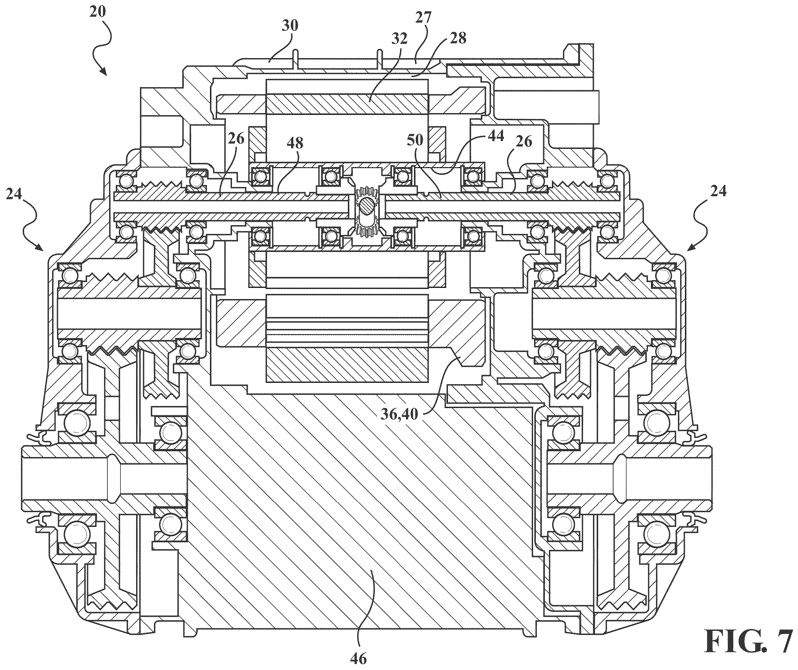

With reference to the Figures, wherein like numerals indicate like parts throughout the several views, an electric machine 20 is generally shown in FIG. 1. The electric machine 20 may be used in a drive module assembly 22, as shown in FIG. 7, with the drive module assembly 22 including the electric machine 20 and a geartrain 24 rotatably coupled to an output 26 of the electric machine 20. The electric machine 20 is configured to deliver rotational torque to wheels of a vehicle through the geartrain 24. The vehicle may include an internal combustion engine and, therefore, be a hybrid vehicle. The vehicle may also be a battery electric vehicle that is free of an internal combustion engine. It is to be appreciated that the vehicle may include one or more of the drive module assemblies 22, such as two drive module assemblies.

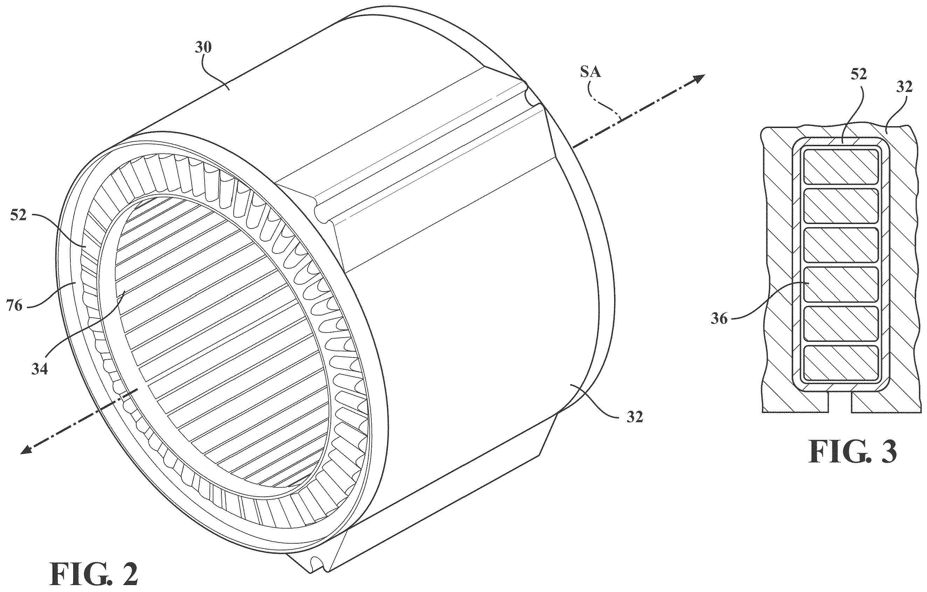

With reference to FIGS. 1 and 4, the electric machine 20 includes a machine housing 27 defining a machine housing interior 28. The electric machine 20 also includes a stator 30 disposed in the machine housing interior 28 and extending along a stator axis SA. As shown in FIGS. 1-4, the stator 30 includes a stator core 32 defining a stator core interior 34 and a plurality of windings 36 disposed in the stator core interior 34. The stator core 32 may be a plurality of stator laminations. The plurality of windings 36 has first end windings 38 extending outside of the stator core interior 34 in a first direction FD along the stator axis SA and second end windings 40 extending outside of the stator core interior 34 in a second direction SD along the stator axis SA opposite the first direction FD.

With particular reference to FIGS. 1 and 4, the electric machine 20 also includes a rotor 42 disposed in the stator core interior 34 and extending along a rotor axis RA. The rotor 42 may define a rotor interior 44 disposed about the rotor axis RA. The electric machine 20 may include a differential 46, as shown in FIG. 7, disposed in the rotor interior 44 and rotatably coupled to the rotor 42. The electric machine 20 may include a first input shaft 48 rotatably coupled to the differential 46, and a second input shaft 50 rotatably coupled to the differential 46.

With reference again to FIGS. 1-4, the electric machine 20 includes an internal core 52 surrounding the plurality of windings within the stator core interior 34. The internal core 52 may be further defined as an overmolded core. When present, the overmolded core comprises an overmolded material. The overmolded material may include high temperature plastic, thermoset, polyphenylene sulfide (PPS), thermoplastic, thermotransfer material, and the like, and may be formed through an injection molding process. The internal core 52 may encapsulate each winding of the plurality of windings 36 along the stator axis SA. The internal core 52 may be engaged with each winding of the plurality of windings 36. Typically, the internal core 52 and the stator core 32 are separate components (i.e., two or more pieces). Typically, the internal core 52 and the stator core 32 are comprised of different materials. For example, the stator core 32, as mentioned above, may be a plurality of laminations comprised of electrical steel, and the internal core 52 may be an overmolded material.

The internal core 52 includes a first upper portion 86 facing the first direction FD, a second upper portion 88 spaced from the first upper portion 86 along the stator axis SA and facing the second direction SD, a first lower portion 90 disposed between the first upper portion 86 and the stator axis SA and facing the first direction FD, and a second lower portion 92 disposed between the second upper portion 88 and the stator axis SA and facing the second direction SD. The first upper portion 86, second upper portion 88, first lower portion 90, and the second lower portion 92 may be referred to as sealing extrusions. The first upper portion 86, the second upper portion 88, the first lower portion 90, and the second lower portion 92 may be integral with one another.

The internal core 52 may include a body portion 93 disposed in the stator core 32. The first upper portion 86 and the first lower portion 90 extend from the body portion 93 in the first direction FD, and the second upper portion 88 and the second lower portion 92 extend from the body portion 93 in the second direction. Typically, the body portion 93, the first upper portion 86, the first lower portion 90, the second upper portion 88, and the second lower portion 92 are integral with one another (i.e., one piece).

The electric machine 20 includes a first insert 94 surrounding the first end windings 38. The first insert 94 is engaged with the internal core 52 to define a first cooling channel 54 for encapsulating the first end windings 38. The electric machine 20 also includes a second insert 96 surrounding the second end windings 40. The second insert 96 is engaged with the internal core 52 to define a second cooling channel 56 for encapsulating the second end windings. The internal core 52 may include a body portion 93 disposed in the stator core 32. The first upper portion 86 and the first lower portion 90 extend from the body portion 93 in the first direction FD, and the second upper portion 88 and the second lower portion 92 extend from the body portion 93 in the second direction.

Having the first insert 94 engaged with the internal core 52 to the first cooling channel 54 for encapsulating the first end windings 38, and the second insert 96 surrounding the second end windings 40 and engaged with the internal core 52 to define the second cooling channel 56 for encapsulating the second end windings 40 allows for numerous advantages. First, having the first insert 94 engaged with the internal core 52 to the first cooling channel 54 for encapsulating the first end windings 38, and the second insert 96 surrounding the second end windings 40 and engaged with the internal core 52 to define the second cooling channel 56 for encapsulating the second end windings 40 allows for a complete seal of the first and second cooling channels 54, 56 such that the only fluid into and out of the first and second cooling channels 54, 56 is associated with the respective inlets and outlets.

Second, having the first insert 94 engaged with the internal core 52 to the first cooling channel 54 for encapsulating the first end windings 38, and the second insert 96 surrounding the second end windings 40 and engaged with the internal core 52 to define the second cooling channel 56 for encapsulating the second end windings 40 allows for ease of manufacturing and flexibility in design as the first and second inserts 94, 96 may be designed based on each specific application.

Third, the first insert 94 engaged with the internal core 52 to the first cooling channel 54 for encapsulating the first end windings 38, and the second insert 96 surrounding the second end windings 40 and engaged with the internal core 52 to define the second cooling channel 56 for encapsulating the second end windings 40 allows for better cooling of the stator 32 because the components defining the first and second cooling channels 54, 56 are not engaged solely with the stator core 32, which allows for better heat dissipation. In one embodiment, the first insert 94 is directly engaged with the first upper portion 86 and the first lower portion 90, and the second insert 96 is directly engaged with the second upper portion 88 and the second lower portion 92. In yet another embodiment, the first insert 94 is solely directly engaged with the first upper portion 86 and the first lower portion 90 to form a seal, and the second insert 96 is solely directly engaged with the second upper portion 88 and the second lower portion 92 to form a seal. In other words, the first insert 94 is not engaged with the stator core 32 and the second insert 96 is not engaged with the stator core 32, which allows for better heat dissipation. Additionally, having the first insert 94 engaged with the first upper portion 86 and the first lower portion 90 and having the second insert 96 engaged with the second upper portion 88 and the second lower portion 92 allows for the first and second cooling channels 54, 56 to be formed without the use of fasteners, which are typically engaged with various components of an electric machine and the stator core to form first and second cooling channels. However, engagement of various fasteners to the stator core can negatively affect the flux of the stator core, and such fasteners often overheat and require further cooling. To this end, having the first insert 94 engaged with the first upper portion 86 and the first lower portion 90, and the second insert 96 engaged with the second upper portion 88 and the second lower portion 92 may remove the need for use of any fasteners as the first and second cooling channels 54, 56 may be formed without the use of fasteners.

Furthermore, having the first insert 94 being engaged with the first upper portion 86 and the first lower portion 90, and the second insert 96 engaged with the second upper portion 88 and the second lower portion 92 allows for blind assembly of the electric machine 20 and, in particular, when forming the first and second cooling channels 54, 56 during assembly of the electric machine 20. Also, having the first insert 94 being engaged with the first upper portion 86 and the first lower portion 90, and the second insert 96 engaged with the second upper portion 88 and the second lower portion 92 removes the need of using magnetic material, such as steel, for assembly of the electric machine 20 and, in particular, for securing an enclosure to define first and second cooling channels. Use of magnetic steel for fasteners and, in particular, fasteners to the stator core itself, can negatively alter the magnetic flux and result in the steel magnetic fasteners overheating. Furthermore, having the first insert 94 being engaged with the first upper portion 86 and the first lower portion 90, and the second insert 96 engaged with the second upper portion 88 and the second lower portion 92 allows for substantially similar or identical thermal expansion coefficients of the first insert 94, the second insert 96, and the internal core 52.

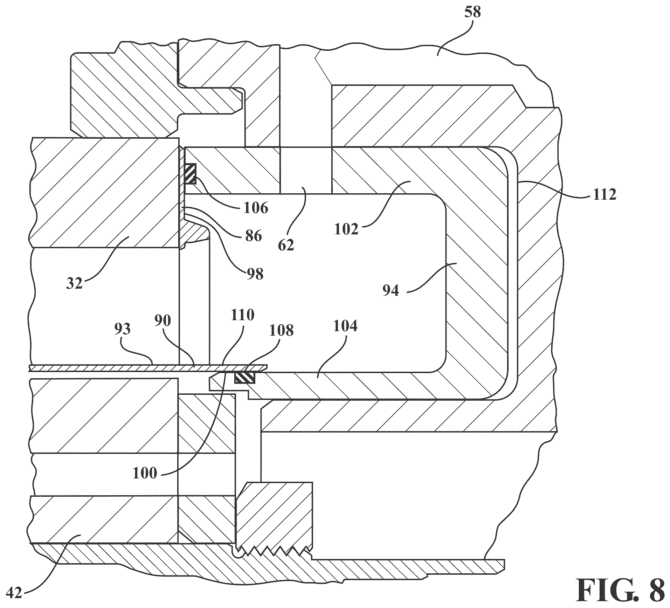

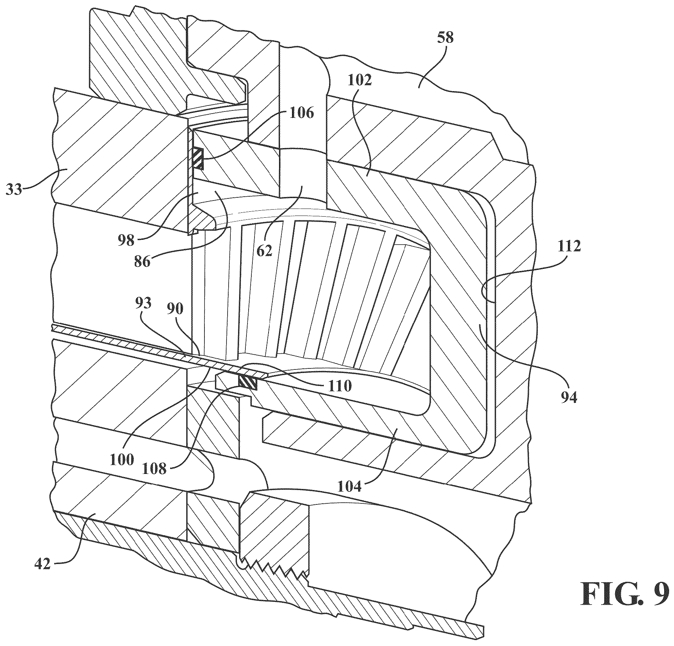

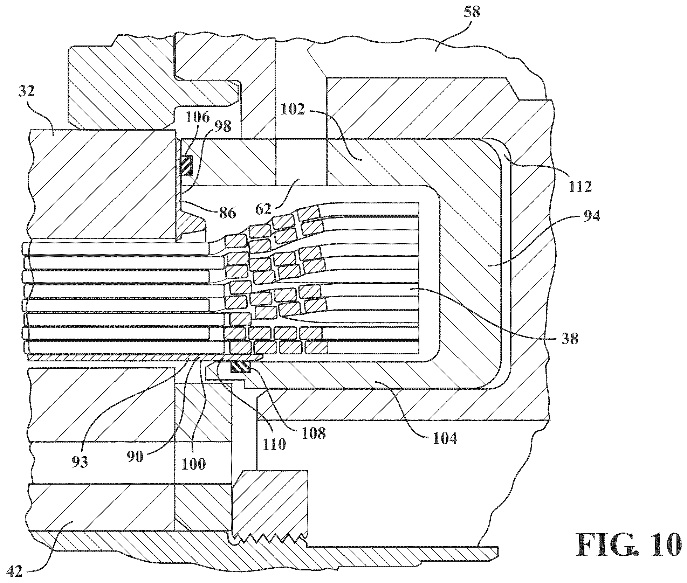

With reference to FIGS. 8-10, the first upper portion 86 may include a first upper face 98 and the first lower portion 90 includes a first lower face 100. The first insert 94 may have a first upper arm 102 extending toward and engaging the first upper face 98 to define the first cooling channel 54, and the first insert 94 may have a first lower arm 104 extending toward and engaging the first lower face 100 to further define the first cooling channel 54. In one embodiment, the first upper arm 102 is directly engaged with the first upper face 98 and the first lower arm 104 is directly engaged with the first lower face 100. The first insert 94 may have U-shape configuration.

The first upper face 98 may be perpendicularly oriented with respect to the stator axis SA such that the first upper face 98 is facing the first direction, and the first lower face 100 may parallelly oriented with respect to the stator axis SA such that the first lower face 100 is facing the stator axis, as shown in FIGS. 8-10. Having the first lower face 100 parallelly oriented with respect to the stator axis SA allows easier installation of the rotor 42.

With continued reference to FIGS. 8-10, the electric machine 20 may include a first upper gasket 106 disposed between the first upper face 98 and the first upper arm 102, with the first upper gasket 106 being axially compressed between the first upper face 98 and the first upper arm 102 with respect to the stator axis SA. The electric machine 20 may include a first lower gasket 108 disposed between the first lower face 100 and the first lower arm 104, with the first lower gasket 108 being radially compressed between the first lower face 100 and the first lower arm 104 with respect to the stator axis SA.

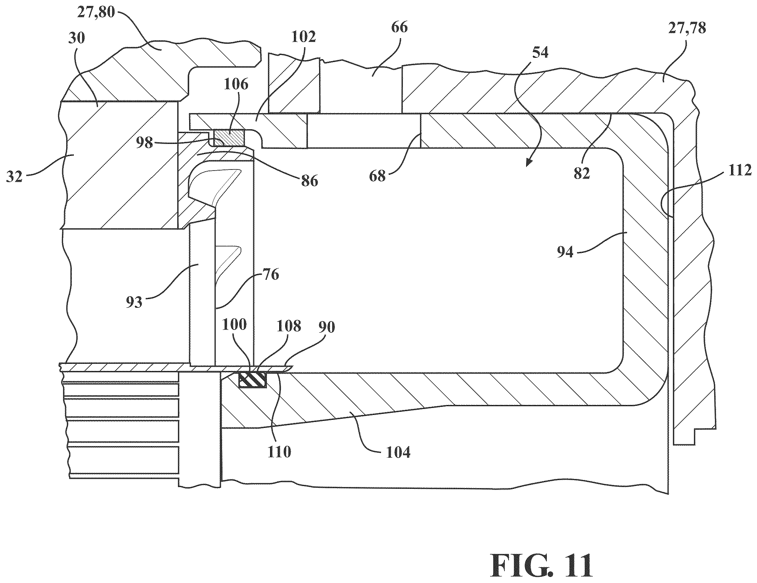

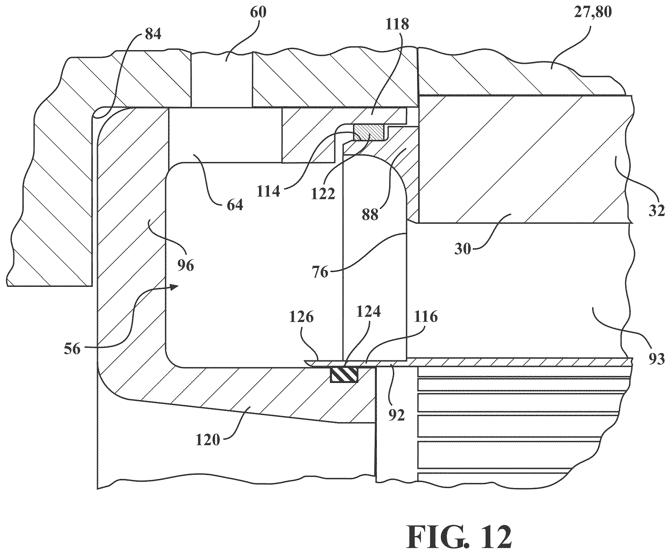

With reference to FIGS. 11 and 12, the first upper face 98 may be parallelly oriented with respect to the stator axis SA such that the first upper face 98 is facing the stator axis SA, and first lower face 100 may be parallelly oriented with respect to the stator axis SA such that the first lower face 100 is facing the stator axis SA. In such embodiments, the first upper gasket 106 may be disposed between the first upper face 98 and the first upper arm 102 with the first upper gasket 106 being radially compressed between the first upper face 98 and the first upper arm 102 with respect to the stator axis SA, and the first lower gasket 108 may be disposed between the first lower face 100 and the first lower arm 104 with the first lower gasket 108 being radially compressed between the first lower face 100 and the first lower arm 104 with respect to the stator axis SA.

The internal core 52 may include a first lower protrusion 110 extending away from the stator core interior 34 in the first direction FD with the first lower protrusion 110 including the first lower face 100.

The machine housing 27 may define a first insert cavity 112 configured and shaped to receive the first insert 94. The first insert 94 and the machine housing 27 may be engaged with one another and, in one embodiment, directly engaged with one another.

It is to be appreciated that similar to the embodiment shown in FIGS. 8-10 with respect to the first cooling channel 54 side of the electric machine 20, the second upper portion 88 may include a second upper face 114 and the second lower portion 92 may similarly include a second lower face 116. Although not expressly shown in the FIGS., the second insert 96 may have a second upper arm 118 extending toward and engaging the second upper face 114 to define the second cooling channel 56, and the second insert 96 may have a second lower arm 120 extending toward and engaging the second lower face 116 to further define the second cooling channel 56. In one embodiment, the second upper arm 118 is directly engaged with the second upper face 114 and the second lower arm 120 is directly engaged with the second lower face 116. The second insert 96 may have U-shape configuration.

The second upper face 114 may be perpendicularly oriented with respect to the stator axis SA such that the second upper face 114 is facing the first direction FD, and the second lower face 116 is parallelly oriented with respect to the stator axis SA such that the second lower face 116 is facing the stator axis SA. Having the second lower face 116 parallelly oriented with respect to the stator axis SA allows easier installation of the rotor 42.

The electric machine 20 may include a second upper gasket 122 disposed between the second upper face 114 and the second upper arm 118, with the second upper gasket 122 being axially compressed between the second upper face 114 and the second upper arm 118 with respect to the stator axis SA. The electric machine 20 may include a second lower gasket 124 disposed between the second lower face 116 and the second lower arm 120, with the second lower gasket 124 being radially compressed between the second lower face 116 and the second lower arm 120 with respect to the stator axis SA.

With reference to the embodiment shown in FIGS. 11 and 12, the second upper face 114 may be parallelly oriented with respect to the stator axis SA such that the first upper face 114 is facing the stator axis SA, and second lower face 116 may be parallelly oriented with respect to the stator axis SA such that the second lower face 116 is facing the stator axis SA. In such embodiments, the second upper gasket 122 may be disposed between the second upper face 114 and the second upper arm 118 with the second upper gasket 122 being radially compressed between the second upper face 114 and the second upper arm 118 with respect to the stator axis SA, and the second lower gasket 124 may be disposed between the second lower face 116 and the second lower arm 120 with the second lower gasket 124 being radially compressed between the second lower face 116 and the second lower arm 120 with respect to the stator axis SA.

The internal core 52 may include a second lower protrusion 126 extending away from the stator core interior 34 in the second direction SD with the second lower protrusion 126 including the second lower face 116.

The machine housing 27 may define a second insert cavity 128 configured and shaped to receive the second insert 94. The first insert 94 and the machine housing 27 may be engaged with one another and, in one embodiment, directly engaged with one another.

With reference to FIGS. 1-4, the internal core 52 may be in direct contact with the plurality of windings 36 within the stator core interior 34 such that the stator 30 is free of a fluid path fluidly coupling the first cooling channel 54 and the second cooling channel 56. Alternatively, or additionally, the internal core 52 and the plurality of windings 36 may define a barrier surface 76 perpendicular to stator axis SA with the barrier surface 76 being continuous within the stator core interior 34 such that the stator 30 is free of a fluid path fluidly coupling the first cooling channel 54 and the second cooling channel 56. The stator 30 may be free of insulation paper between the plurality of windings of the stator 30, particularly in embodiments as set forth above where the internal core 52 is in direct contact with the plurality of windings 36 within the stator core interior 34, and/or when the internal core 52 and the plurality of windings 36 define the barrier surface 76 being continuous within the stator core interior 34 such that the stator 30 is free of a fluid path fluidly coupling the first cooling channel 54 and the second cooling channel 56.

The electric machine 20 may include a first supply path 58 configured to direct fluid to the first cooling channel 54 through a first supply inlet 62, and a second supply path 60 configured to direct fluid to the second cooling channel 56 through a second supply inlet 64. Typically, the internal core 52 is disposed between the first and second supply inlets 62, 64 such that the internal core 52 fluidly separates the first and second supply paths 58, 60. The electric machine 20 may further include a first outlet path 66 configured to direct fluid from the first cooling channel 54 through a first outlet 68 to a sump 70, and a second outlet path 72 configured to direct fluid from the second cooling channel 56 through a second outlet 74 to the sump 70.

In one embodiment, the first and second cooling channels 54, 56 are fluidly separate from one another. In other words, fluid from the first cooling channel 54 is unable to enter the second cooling channel 56, and fluid from the second cooling channel 56 is unable to enter the first cooling channel 54. It is to be appreciated that fluid from the first cooling channel 54 and second cooling channel 56 may both enter into a single sump, or that the fluid from the first cooling channel 54 may enter into a first sump and that the fluid from the second cooling channel 56 may enter into a second sump. In either embodiment, after the fluid leaves the sump, the fluid that enters the first supply path 58 remains separate from the fluid that enters the second supply path 60 and, therefore, the first and second cooling channels 54, 56 are fluidly separate from one another.

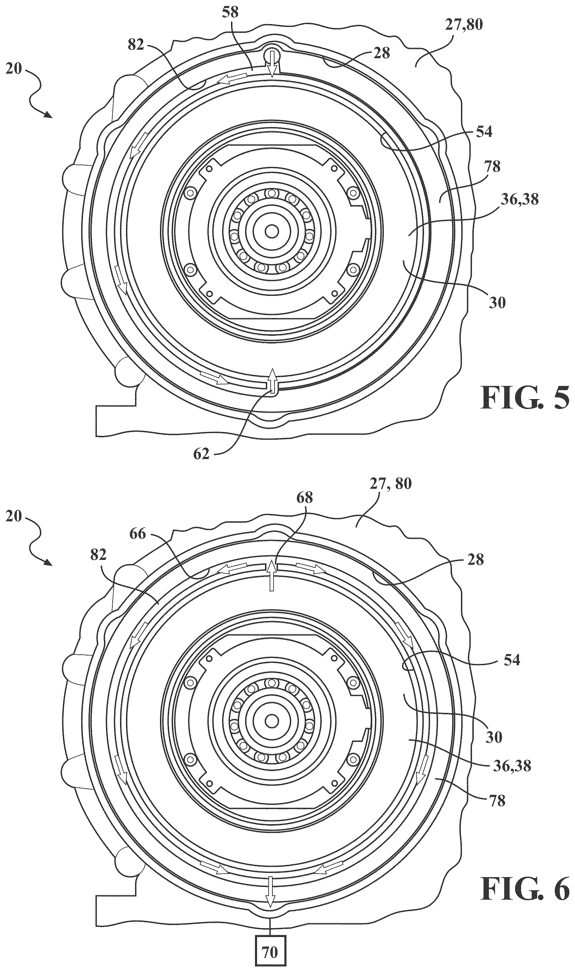

The first supply path 58 may spiral about the stator axis SA and the second supply path 60 may spiral about the stator axis SA, as best shown in FIGS. 5 and 6. It is to be appreciated that the first supply path 58 and second supply path 60 may spiral about the stator axis SA with a pitch angle of zero, and any pitch angle greater than zero. The first supply path 58 may be fluidly separate from the second supply path 60 such that the first supply path 58 independently supplies fluid to the first cooling channel 54 and the second supply path 60 independently supplies fluid to the second cooling channel 56.

The machine housing 27 may be further defined as a first machine housing 78 and a second machine housing 80 coupled to the first machine housing 78, as shown in FIGS. 4 and 7. The first machine housing 78 may be at least partially nested within the second machine housing 80. As shown in FIG. 1, the second machine housing 80 is removed to show the stator 30, the internal core 52, and the rotor 42. When present, the first machine housing 78 at least partially defines the first cooling channel 54 with the internal core 52, and the second machine housing 80 at least partially defines the second cooling channel 56 with the internal core 52. In one embodiment, the first supply path 58 is defined by the first machine housing 78, and the second supply path 60 is defined by the second machine housing 80. In such embodiments, the first machine housing 78 may have a first inner housing surface 82 facing the stator axis SA, the second machine housing 80 may have a second inner housing surface 84 facing the stator axis SA, and the first supply path 58 may be defined by the first inner housing surface 82 and the second supply path 60 may be defined by the second inner housing surface 84. For example, the first supply path 58 may be entirely defined by the first machine housing 78 and the second supply path 60 may be entirely defined by the second machine housing 80. It is contemplated that the first supply path 58 and second supply path 60 may be collectively defined between the first machine housing 78 and the second machine housing 80, respectively, and one or more components, as described below.

Embodiment 1: An electric machine comprising:
a machine housing defining a machine housing interior;
a stator disposed in said machine housing interior and extending along a stator axis, wherein said stator comprises a stator core defining a stator core interior and a plurality of windings disposed in said stator core interior, and wherein said plurality of windings has first end windings extending outside of said stator core interior in a first direction along said stator axis and second end windings extending outside of said stator core interior in a second direction along said stator axis opposite said first direction;
an internal core surrounding said plurality of windings within said stator core interior comprises,
   a first upper portion facing said first direction,
   a second upper portion spaced from said first upper portion along said stator axis and facing said second direction,
   a first lower portion disposed between said first upper portion and said stator axis and facing said first direction, and
   a second lower portion disposed between said second upper portion and said stator axis and facing said second direction;
a first insert surrounding said first end windings, wherein said first insert is engaged with said internal core to define a first cooling channel for encapsulating said first end windings; and
a second insert surrounding said second end windings, wherein said second insert is engaged with said internal core to define a second cooling channel for encapsulating said second end windings.

Embodiment 2: The electric machine as set forth in embodiment 1, wherein said first upper portion comprises a first upper face, wherein said first lower portion comprises a first lower face, wherein said first insert has a first upper arm extending toward and engaging said first upper face to define said first cooling channel, and wherein said first insert has a first lower arm extending toward and engaging said first lower face to further define said first cooling channel.

Embodiment 3: The electric machine as set forth in embodiment 2, wherein said first upper face is perpendicularly oriented with respect to said stator axis such that said first upper face is facing said first direction, and wherein said first lower face is parallelly oriented with respect to said stator axis such that said first lower face is facing said stator axis.

Embodiment 4: The electric machine as set forth in embodiment 3 further comprising a first upper gasket disposed between said first upper face and said first upper arm, wherein said first upper gasket is axially compressed between said first upper face and said first upper arm with respect to said stator axis, and further comprising a first lower gasket disposed between said first lower face and said first lower arm, wherein said first lower gasket is radially compressed between said first lower face and said first lower arm with respect to said stator axis.

Embodiment 5: The electric machine as set forth in any one of embodiments 1 and 2, wherein said first upper face is parallelly oriented with respect to said stator axis such that said first upper face is facing said stator axis, and wherein said first lower face is parallelly oriented with respect to said stator axis such that said first lower face is facing said stator axis.

Embodiment 6: The electric machine as set forth in embodiment 5 further comprising a first upper gasket disposed between said first upper face and said first upper arm, wherein said first upper gasket is radially compressed between said first upper face and said first upper arm with respect to said stator axis, and further comprising a first lower gasket disposed between said first lower face and said first lower arm, wherein said first lower gasket is radially compressed between said first lower face and said first lower arm with respect to said stator axis.

Embodiment 7: The electric machine as set forth in any one of embodiments 2-6, wherein said internal core comprises a first lower protrusion extending away from said stator core interior in said first direction, and wherein said first lower protrusion comprises said first lower face.

Embodiment 8: The electric machine as set forth in any one of the preceding embodiments, wherein said first insert has a U-shape configuration.

Embodiment 9: The electric machine as set forth in any one of the preceding embodiments, wherein said machine housing defines a first insert cavity configured and shaped to receive said first insert.

Embodiment 10: The electric machine as set forth in any one of the preceding embodiments, wherein said first insert and said machine housing are engaged with one another.

Embodiment 11: The electric machine as set forth in any one of the preceding embodiments further comprising a first supply path configured to direct fluid to said first cooling channel through a first supply outlet defined by said first insert.

Embodiment 12: The electric machine as set forth in any one of the preceding embodiments, wherein said second upper portion comprises a second upper face, wherein said second lower portion comprises a second lower face, wherein said second insert has a second upper arm extending toward and engaging said second upper face to define said second cooling channel, and wherein said second insert has a second lower arm extending toward and engaging said second lower face to further define said second cooling channel.

Embodiment 13: The electric machine as set forth in embodiment 12, wherein said second upper face is perpendicularly oriented with respect to said stator axis such that said second upper face is facing said second direction, wherein said second lower face is parallelly oriented with respect to said stator axis such that said first lower face is facing said stator axis.

Embodiment 14: The electric machine as set forth in any one of embodiments 12 and 13 further comprising a second upper gasket disposed between said second upper face and said second upper arm, wherein said second upper gasket is axially compressed between said second upper face and said second upper arm with respect to said stator axis, and further comprising a second lower gasket disposed between said second lower face and said second lower arm, wherein said second lower gasket is radially compressed between said second lower face and said second lower arm with respect to said stator axis.

Embodiment 15: The electric machine as set forth in embodiment 12, wherein said second upper face is parallelly oriented with respect to said stator axis such that said second upper face is facing said stator axis, and wherein said second lower face is parallelly oriented with respect to said stator axis such that said second lower face is facing said stator axis.

Embodiment 16: The electric machine as set forth in embodiment 15 further comprising a second upper gasket disposed between said second upper face and said second upper arm, wherein said second upper gasket is radially compressed between said second upper face and said second upper arm with respect to said stator axis, and further comprising a second lower gasket disposed between said second lower face and said second lower arm, wherein said second lower gasket is radially compressed between said second lower face and said second lower arm with respect to said stator axis.

Embodiment 17: The electric machine as set forth in any one of embodiments 12-16, wherein said internal core comprises a second lower protrusion extending away from said stator core interior in said second direction, and wherein said second lower protrusion comprises said second lower face.

Embodiment 18: The electric machine as set forth in any one of the preceding embodiments, wherein said first insert has a U-shape configuration.

Embodiment 19: The electric machine as set forth in any one of the preceding embodiments, wherein said machine housing defines a second insert cavity configured and shaped to receive said second insert.

Embodiment 20: The electric machine as set forth in any one of the preceding embodiments, wherein said second insert and said machine housing are engaged with one another.

Embodiment 21: The electric machine as set forth in any one of the preceding embodiments, wherein said first upper portion, said second upper portion, said first lower portion, and said second lower portion are integral with one another.

Embodiment 22: The electric machine as set forth in any one of the preceding embodiments, wherein said internal core further comprises a body portion, wherein said body portion is disposed in said stator core and said first upper portion and said first lower portion extend from said body portion in said first direction, and said second upper portion and said second lower portion extend from said body portion in said second direction.

Embodiment 23: The electric machine as set forth in any one of the preceding embodiments, wherein said first insert is cylindrically disposed 360 degrees about said stator axis.

Embodiment 24: The electric machine as set forth in any one of the preceding embodiments, wherein second insert is cylindrically disposed 360 degrees about said stator axis.

Embodiment 25: The electric machine as set forth in any one of the preceding embodiments, wherein said internal core is further defined as an overmolded core.

Embodiment 26: The electric machine as set forth in any one of the preceding embodiments, wherein said internal core is in direct contact with said plurality of windings within said stator core interior such that the stator is free of a fluid path fluidly coupling said first cooling channel and said second cooling channel.

Embodiment 27: The electric machine as set forth in any one of the preceding embodiments, wherein said internal core and said stator core are separate components.

Embodiment 28: The electric machine as set forth in any one of the preceding embodiments, wherein said internal core and said plurality of windings define a barrier surface perpendicular to said stator axis, and wherein said barrier surface is continuous within said stator core interior such that the stator is free of a fluid path fluidly coupling said first cooling channel and said second cooling channel.

Embodiment 29: The electric machine as set forth in any one of the preceding embodiments further comprising a rotor disposed in said stator housing interior and extending along a rotor axis.

Embodiment 30: A drive module assembly comprising said electric machine as set forth in any one of the preceding embodiments, and further comprising a geartrain rotatably coupled to an output of said electric machine that is configured to deliver rotational torque to wheels of a vehicle.

## Claims

1. An electric machine comprising:
a machine housing defining a machine housing interior;
a stator disposed in said machine housing interior and extending along a stator axis, wherein said stator comprises a stator core defining a stator core interior and a plurality of windings disposed in said stator core interior, and wherein said plurality of windings has first end windings extending outside of said stator core interior in a first direction along said stator axis and second end windings extending outside of said stator core interior in a second direction along said stator axis opposite said first direction;
an internal core surrounding said plurality of windings within said stator core interior comprises,
a first upper portion facing said first direction,
a second upper portion spaced from said first upper portion along said stator axis and facing said second direction,
a first lower portion disposed between said first upper portion and said stator axis and facing said first direction, and
a second lower portion disposed between said second upper portion and said stator axis and facing said second direction;
a first insert surrounding said first end windings, wherein said first insert is engaged with said internal core to define a first cooling channel for encapsulating said first end windings; and
a second insert surrounding said second end windings, wherein said second insert is engaged with said internal core to define a second cooling channel for encapsulating said second end windings.

2. The electric machine as set forth in claim 1, wherein said first upper portion comprises a first upper face, wherein said first lower portion comprises a first lower face, wherein said first insert has a first upper arm extending toward and engaging said first upper face to define said first cooling channel, and wherein said first insert has a first lower arm extending toward and engaging said first lower face to further define said first cooling channel.

3. The electric machine as set forth in claim 2, wherein said first upper face is perpendicularly oriented with respect to said stator axis such that said first upper face is facing said first direction, and wherein said first lower face is parallelly oriented with respect to said stator axis such that said first lower face is facing said stator axis.

4. The electric machine as set forth in claim 3 further comprising a first upper gasket disposed between said first upper face and said first upper arm, wherein said first upper gasket is axially compressed between said first upper face and said first upper arm with respect to said stator axis, and further comprising a first lower gasket disposed between said first lower face and said first lower arm, wherein said first lower gasket is radially compressed between said first lower face and said first lower arm with respect to said stator axis.

5. The electric machine as set forth in any one of claims 1 and 2, wherein said first upper face is parallelly oriented with respect to said stator axis such that said first upper face is facing said stator axis, and wherein said first lower face is parallelly oriented with respect to said stator axis such that said first lower face is facing said stator axis.

6. The electric machine as set forth in claim 5 further comprising a first upper gasket disposed between said first upper face and said first upper arm, wherein said first upper gasket is radially compressed between said first upper face and said first upper arm with respect to said stator axis, and further comprising a first lower gasket disposed between said first lower face and said first lower arm, wherein said first lower gasket is radially compressed between said first lower face and said first lower arm with respect to said stator axis.

7. The electric machine as set forth in any one of claims 2-6, wherein said internal core comprises a first lower protrusion extending away from said stator core interior in said first direction, and wherein said first lower protrusion comprises said first lower face.

8. The electric machine as set forth in any one of the preceding claims, wherein said second upper portion comprises a second upper face, wherein said second lower portion comprises a second lower face, wherein said second insert has a second upper arm extending toward and engaging said second upper face to define said second cooling channel, and wherein said second insert has a second lower arm extending toward and engaging said second lower face to further define said second cooling channel.

9. The electric machine as set forth in claim 8, wherein said internal core comprises a second lower protrusion extending away from said stator core interior in said second direction, and wherein said second lower protrusion comprises said second lower face.

10. The electric machine as set forth in any one of the preceding claims, wherein said first upper portion, said second upper portion, said first lower portion, and said second lower portion are integral with one another.

11. The electric machine as set forth in any one of the preceding claims, wherein said internal core further comprises a body portion, wherein said body portion is disposed in said stator core and said first upper portion and said first lower portion extend from said body portion in said first direction, and said second upper portion and said second lower portion extend from said body portion in said second direction.

12. The electric machine as set forth in any one of the preceding claims, wherein said internal core is further defined as an overmolded core.

13. The electric machine as set forth in any one of the preceding claims, wherein said internal core and said stator core are separate components.

14. The electric machine as set forth in any one of the preceding claims, wherein said internal core and said plurality of windings define a barrier surface perpendicular to said stator axis, and wherein said barrier surface is continuous within said stator core interior such that the stator is free of a fluid path fluidly coupling said first cooling channel and said second cooling channel.

15. A drive module assembly comprising said electric machine as set forth in any one of the preceding claims further comprising a geartrain rotatably coupled to an output of said electric machine that is configured to deliver rotational torque to wheels of a vehicle, and wherein said electric machine further comprises a rotor disposed in said stator housing interior and extending along a rotor axis.
